# EUROPÄISCHE PATENTSCHRIFT

(11) **EP 2 326 808 B1**
(45) Veröffentlichungstag und Bekanntmachung des Hinweises auf die Patenterteilung: **21.08.2013**
(21) Anmeldenummer: 09778340.1
(22) Anmeldetag: 04.09.2009
(51) Int. Cl.: F01N 3/20, B01D 53/94

(54) **KRAFTWAGEN MIT SYSTEM ZUM ZUFÜHREN VON FLÜSSIGKEIT IN EIN ANDERES MEDIUM, INSBESONDERE ZUM ZUFÜHREN EINES REDUKTIONSMITTELS IN DAS ABGAS EINES VERBRENNUNGSMOTORS**
MOTOR VEHICLE HAVING A SYSTEM FOR FEEDING FLUID INTO ANOTHER MEDIUM, PARTICULARLY FOR FEEDING A REDUCING AGENT INTO THE EXHAUST GAS OF AN INTERNAL COMBUSTION ENGINE
VÉHICULE AUTOMOBILE DOTÉ D'UN SYSTÈME PERMETTANT L'ACHEMINEMENT DE LIQUIDE DANS UN AUTRE MILIEU, NOTAMMENT L'ACHEMINEMENT D'UN AGENT DE RÉDUCTION DANS LE GAZ D'ÉCHAPPEMENT D'UN MOTEUR À COMBUSTION INTERNE

(30) Priorität: 26.09.2008 DE 102008049097
(43) Veröffentlichungstag der Anmeldung: 01.06.2011
(73) Patentinhaber: Daimler AG, 70327 Stuttgart (DE)
(72) Erfinder: VIETH, Siegfried, 71642 Ludwigsburg (DE)
(74) Vertreter: JENSEN & SON
(86) Internationale Anmeldenummer: PCT/EP2009/006435
(87) Internationale Veröffentlichungsnummer: WO 2010/034401

(56) Entgegenhaltungen:
- EP-A- 1 236 499
- WO-A-96/08639
- DE-A1- 10 324 482
- DE-A1-102007 000 666
- DE-C1- 19 819 579

## Beschreibung

Die Erfindung betrifft einen Kraftwagen nach dem Oberbegriff von Patentanspruch 1.

Der Kraftwagen weist somit ein System (bzw. eine Vorrichtung) zum Zuführen von Flüssigkeit in ein anderes Medium auf. Hauptanwendungsfall ist das Einbringen einer Flüssigkeit in das Abgas eines Verbrennungsmotors des Kraftfahrzeugs. Die Flüssigkeit ist typischerweise ein Reduktionsmittel, kann aber auch Kraftstoff sein.

Bei diesem Hauptanwendungsfall wird die Flüssigkeit zur Verminderung der im Abgas des Verbrennungsmotors enthaltenen Schadstoffe, im Besonderen der Stickoxide, in das Abgas eingebracht. Dies ist insbesondere dann sinnvoll, wenn der Verbrennungsmotor mit Luftüberschuss betrieben wird, wie dies z.B. bei einem Diesel- und einem Magermotor der Fall ist. In das Abgas wird eine Ammoniak freisetzende Substanz eingesetzt, typischerweise Harnstoff, der in wässriger Lösung bereitgestellt wird. Bei einer Reaktion des Harnstoffs mit dem Wasser entsteht Ammoniak. Durch selektive katalytische Reduktion wird dieser Ammoniak mit Stickstoffmonoxid und Stickstoffdioxid zu molekularem Stickstoff und Wasser umgewandelt.

Die Abgabeeinheit, über die die Flüssigkeit in das Abgas eingebracht wird, ist üblicherweise mit der Abgasanlage gekoppelt und kann daher stark erhitzen. Ein Hauptbehälter für die Flüssigkeit wird soweit von der Abgabeeinheit entfernt angeordnet, dass sich die Flüssigkeit in ihm nicht erhitzt. Der Hauptbehälter ist über eine Zulaufleitung mit der Abgabeeinheit gekoppelt. Es ist nun bekannt, die Flüssigkeit selbst zum Kühlen der Abgabeeinheit zu nutzen. Hierzu wird eine Rücklaufleitung bereitgestellt, über die die Abgabeeinheit mit dem Behälter gekoppelt ist. Es kann dann mehr Flüssigkeit zur Abgabeeinheit geführt werden als von dieser in das Medium eingebracht wird, und die nicht abgegebene Flüssigkeit wird dann zum Behälter zurückgeführt, sie nimmt Wärme von der Abgabeeinheit auf und kühlt diese somit.

In einer Ausführungsform ist ein solches System zum Zuführen von Flüssigkeit in ein anderes Medium in der DE 103 244 82 A1 beschrieben. In der in dieser Druckschrift offenbarten Vorrichtung zur Dosierung eines Reduktionsmittels zum Abgas eines Verbrennungsmotors wird auch die abzugebende Flüssigkeit an der Abgabeeinheit vorbei geführt, und die Rücklaufleitung weist eine Abzweigung auf, an der Reduktionsmittel aus dem Rücklauf entnommen wird, um von der Abgabeeinheit abgegeben zu werden. Das nicht entnommene Reduktionsmittel wird zum Hauptbehälter zurückgeführt.

Aus der WO 96/08639 A1 ist es bekannt, die Leitungen einer Einrichtung zum Einbringen von Flüssigkeit in eine Abgasreinigungsvorrichtung nach Beendigung von deren Betrieb mittels eines Druckgases zu spülen und dies soll den Sinn haben zu verhindern, dass die Zulaufleitung bei kalten Umgebungstemperaturen einfriert. Hierbei ist vorausgesetzt, dass die gesamte Einrichtung zum Einbringen von Flüssigkeit in eine Abgasreinigungsvorrichtung mit einem Druckluftsystem gekoppelt werden kann, das in Nutzfahrzeugen zur Verfügung steht.

In der Zwischenzeit ist man davon abgekommen, bei Vorrichtungen zum Einbringen von Flüssigkeit in das Abgas eines Verbrennungsmotors eine Kopplung mit einem Druckluftsystem vorzusehen. Teilweise ist ein solches Druckluftsystem in Kraftwägen, in denen eine solche Vorrichtung eingesetzt wird, gar nicht vorhanden.

Im Betrieb eines Systems zum Zuführen von Flüssigkeit in eine anderes Medium wird die Flüssigkeit typischerweise durch eine Einheit (wie z.B. eine Pumpe) gefördert, die mit elektrischem Strom arbeitet. Es kann nun sein, dass kurzfristig kein Strom mehr zur Verfügung steht. Zum Beispiel ist bei Gefahrgutfahrzeugen ein Elektroschalter vorgesehen, der unter bestimmten Umständen ausschaltet. Bei einem plötzlichen Stopp des Systems nimmt die Abgabeeinheit Wärme auf, insbesondere wenn sie mit einer Abgasnachbehandlungseinheit gekoppelt ist. Die Abgabeeinheit weist in der Regel elektronische Bauteile auf, die die Ventile so steuern, dass eine bestimmte Abgabemenge abgegeben wird. Diese elektronischen Bauteile können überhitzen und beschädigt werden.

Es ist Aufgabe der Erfindung, bei einem Kraftwagen nach dem Oberbegriff von Patentanspruch 1 für einen Schutz der Abgabeeinheit, insbesondere dieser elektronischen Bauteile zu sorgen. Diese Aufgabe wird durch einen Kraftwagen mit den Merkmalen gemäß Patentanspruch 1 und ein Verfahren zum Betreiben eines Systems zum Zuführen von Flüssigkeit in ein anderes Medium außerhalb des Systems gemäß Patentanspruch 10 gelöst.

Bei dem erfindungsgemäßen Kraftwagen gibt es erfindungsgemäß einen von einer Öffnung in eine der Leitungen für Flüssigkeit zugänglichen weiteren Behälter für Flüssigkeit.

Während der Hauptbehälter für die Flüssigkeit fernab von der Abgabeeinheit angeordnet ist, ist der weitere Behälter wegen seiner Ankopplung an die Zulaufleitung oder auch die Rücklaufleitung näher an der Abgabeeinheit anordenbar. Nun kann durch eine geeignete Maßnahme bewirkt sein, dass sich der Behälter nach Beendigung des Betriebs des Systems selbsttätig entleert. Dies kann beispielsweise einfach dadurch geschehen, dass der Behälter so angeordnet ist, dass er sich aufgrund der Schwerkraft entleert. Beim Entleeren des weiteren Behälters wird Flüssigkeit durch die Leitungen bewegt, insbesondere an der Abgabeeinheit vorbei, und die Abgabeeinheit wird somit gekühlt.

Grundsätzlich kann sich der Behälter in die Rücklaufleitung entleeren und einen Sog bewirken, der Flüssigkeit aus der Zulaufleitung an der Abgabeeinheit vorbei saugt. Der weitere Behälter ist an die Zulaufleitung gekoppelt, und die Flüssigkeit aus dem Behälter drückt Flüssigkeit durch die Zulaufleitung an der Abgabeeinheit vorbei in die Rücklaufleitung und von dieser in den Hauptbehälter.

Bevorzugt erfolgt das Herausdrücken von Flüssigkeit aus dem Behälter dadurch, dass ein entsprechender Druck durch stromlos arbeitende Mittel bereitgestellt wird. Diese Mittel stellen einen auf die Flüssigkeit im Behälter wirkenden Druck bevorzugt ständig bereit, und beim Betrieb des Systems wird ein Gegendruck zu selbigen Druck erzeugt. Nach Beendigung des Betriebs gibt es keinen Gegendruck mehr, und der von den stromlos arbeitenden Mitteln bereit gestellte Druck drängt die Flüssigkeit heraus.

Der Gegendruck lässt sich durch eine Pumpe aufbringen. Damit diese Pumpe nach Beendigung des Betriebs nicht weiter stört, ist diese bevorzugt zwischen dem Hauptbehälter und dem weiteren Behälter angeordnet, und zwischen Pumpe und weiterem Behälter ist ein Rückschlagventil angeordnet. Die Pumpe fördert Flüssigkeit aus dem Hauptbehälter zur Abgabeeinheit und erzeugt hierbei Druck, durch den das Rückschlagventil geöffnet wird. Sobald die Stromzufuhr endet, erzeugt die Pumpe keinen Druck mehr Besonders effizient ist es, wenn der weitere Behälter als Druckspeicher ausgebildet ist. Die Mittel zum Bereitstellen des die Flüssigkeit aus dem Behälter heraus drängenden Drucks sind dann gewissermaßen der weitere Behälter selbst und ein in ihm befindliches unter Druck stehendes Medium, typischerweise ein Gas. Eine besonders einfach gebaute und daher kostengünstige Ausführungsform eines Druckspeichers ist ein Membrandruckbehälter. Bei einem Membrandruckbehälter trennt eine Membran eine Gaskammer von einer Flüssigkeitskammer. In Kombination mit der oben genannten Pumpe wird beim Betrieb des Systems Flüssigkeit in den Membrandruckbehälter hinein gedrückt, und die Membran verkleinert die für das Gas zur Verfügung stehende Kammer, das aufgrund des Flüssigkeitsdrucks komprimiert wird. Nach Beendigung des Betriebs der Pumpe entspannt sich das Gas, es vergrößert sich die Gaskammer und entsprechend verkleinert sich der für die Flüssigkeit zur Verfügung stehende Raum im Membrandruckbehälter, es wird also Flüssigkeit aus dem Membrandruckbehälter heraus gedrückt.

Wie bereits erwähnt, arbeitet das System zum Zuführen von Flüssigkeit in ein anderes Medium bevorzugt druckgaslos. Es gibt also in dem Kraftwagen entweder gar kein Druckgassystem, und wenn es ein solches gibt, ist es nicht mit dem System zum Zuführen von Flüssigkeit gekoppelt. Es ist bevorzugt die Förderpumpe, die die Flüssigkeit vom Hauptbehälter zur Abgabeeinheit und gegebenenfalls zurück wieder zum Hauptbehälter fördert, und es bedarf nicht der Beaufschlagung mit Druckgas, um die Flüssigkeit zu bewegen. Das im Membrandruckbehälter befindliche Gas soll hierbei nicht unter den Begriff des Druckgases fallen, da es nicht einer anhaltenden Flüssigkeitsförderung im normalen Betrieb dient.

Wie bereits erwähnt, ist das System bevorzugt mit einer einem Verbrennungsmotor des Kraftwagens nachgeordneten Abgasanlage (Abgasnachbehandlungseinheit) des Kraftwagens gekoppelt, um in das Abgas Flüssigkeit einzubringen. Wie eingangs erwähnt, ist diese Flüssigkeit typischerweise wässrige Harnstofflösung, so dass der Hauptbehälter bevorzugt mit einer solchen Harnstofflösung gefüllt ist.

Das erfindungsgemäße Verfahren zum Betreiben eines Systems, in dem Flüssigkeit aus einem Hauptbehälter über eine Zulaufleitung einer Abgabeeinheit zugeführt wird und zumindest zum Teil von der Abgabeeinheit an ein anderes Medium außerhalb des Systems abgegeben wird, wobei ein nicht abgegebener Teil über eine Rücklaufleitung zum Hauptbehälter zurückgeführt wird, beinhaltet, dass während eines Betriebs, bei dem die Abgabe erfolgt, bei dem insbesondere die Flüssigkeit mittels eines mit elektrischem Strom laufenden Geräts bewegt wird, verursacht wird, dass nach Beendigung dieses Betriebs, der mit einer Beendigung des zur Verfügungstehens von elektrischem Strom zusammenfallen kann, Flüssigkeit aus einem an die Zulaufleitung angekoppelten weiteren Behälter zur Kühlung der Abgabeeinheit über die Abgabeeinheit zum Hauptbehälter geführt wird.

Bei dem erfindungsgemäßen Verfahren wird somit zu einem Zeitpunkt, zu dem die Energie hierfür zur Verfügung steht (in Form von elektrischem Strom) für den Fall, dass diese nicht mehr zur Verfügung steht, vorgesorgt.

Bevorzugt wird während eines Betriebs, bei dem die Abgabe erfolgt, also die Flüssigkeit z.B. durch eine Pumpe bewegt wird, Flüssigkeit in einem weiteren Behälter gespeichert (also in diesen eingebracht), wobei der weitere Behälter so ausgestaltet sein soll, dass nach Beendigung dieses Betriebs Flüssigkeit selbsttätig aus dem weiteren Behälter gefördert wird. Wie bereits oben erwähnt, ist ein Membrandruckbehälter hierfür geeignet.

Nachfolgend wird eine bevorzugte Ausführungsform der Erfindung unter Bezug auf die Zeichnung beschrieben, in der
- Fig. 1: schematisch den Aufbau eines Systems zum Einbringen von Harnstofflösung in eine Abgasnachbehandlungseinheit mit dem System in einem ersten Betriebszustand und
- Fig. 2: das System aus Fig. 1 in einem zweiten Betriebszustand veranschaulicht.

Ein im Ganzen mit 10 bezeichnetes System zum Einbringen von Harnstoff in eine Abgasnachbehandlungseinheit ist mit einer solchen Abgasnachbehandlungseinheit 12 gekoppelt und zwar ist eine Abgabeeinheit 14 des Systems 10 mit der Abgasnachbehandlungseinheit 12 gekoppelt. Wässrige Harnstofflösung wird in einem Hauptbehälter 16 bevorratet. Dieser Hauptbehälter 16 ist über eine Zulaufleitung 18 mit der Abgabeeinheit 14 gekoppelt. Eine Pumpe 20 fördert wässrigen Harnstoff aus dem Hauptbehälter 16 zur Abgabeeinheit 14. In Richtung zur Abgabeeinheit 14 hin ist der Pumpe 20 ein Rückschlagventil 22 nachgeordnet. Dieses schließt, sobald die Pumpe nicht mehr in Betrieb ist. Von der Abgabeeinheit 14 führt eine Rücklaufleitung 24 zum Behälter 16 zurück. Es gibt stets oder wiederholt einen Anteil an wässriger Harnstofflösung, der vom Hauptbehälter 16 zur Abgabeeinheit 14 gefördert wird und nachfolgend wieder zurückgefördert wird. Dieser Anteil kühlt die Abgabeeinheit 14. Eine Kühlung der Abgabeeinheit 14 ist vorteilhaft, weil die Abgasbehandlungseinheit 12 im Betrieb häufig sehr warm wird.

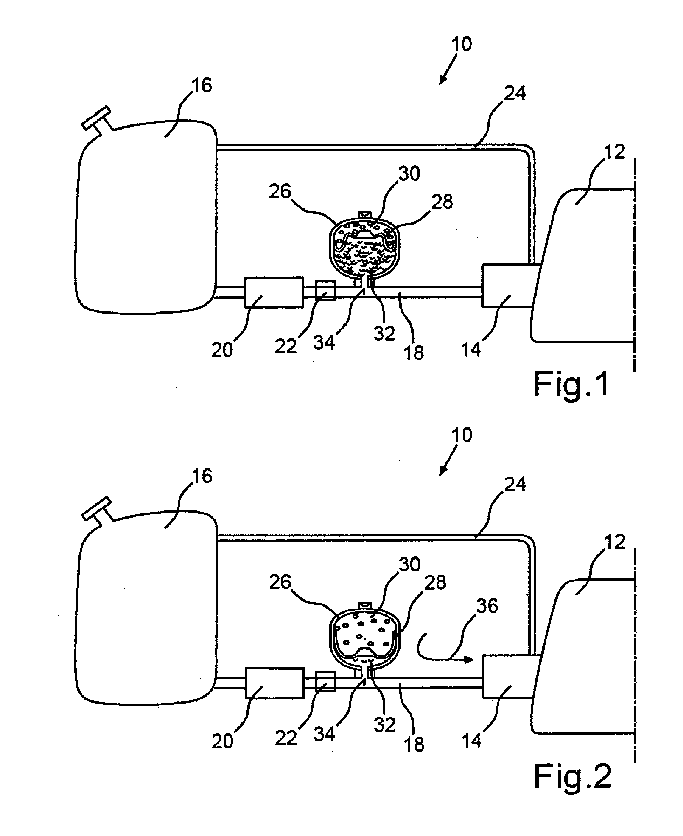

An die Zulaufleitung 18 angekoppelt ist ein Membrandruckbehälter 26. Wie bei Membrandruckbehältern üblich, trennt eine Membran 28 zwei Kammern voneinander, nämlich eine Kammer 30, in der sich Gas befindet, das aus dem Membrandruckbehälter 26 normalerweise nicht entweichen kann, und eine Kammer 32, die von einer Öffnung 34 in der Zulaufleitung 18 zugänglich ist, und in der sich Flüssigkeit, vorliegend wässrige Harnstofflösung befindet. Beim Betrieb der Vorrichtung 10 erzeugt die Pumpe 20 einen hohen Druck, und es wird Flüssigkeit in den Membrandruckbehälter 26 gedrückt, wobei sich die Membran 28 so bewegt, dass sich der Raum 30 für das Gas verkleinert und das Gas unter dem Druck komprimiert wird. Wird nun der Betrieb der Pumpe 20 beendet, was abrupt geschehen kann, beispielsweise wenn die Vorrichtung 10 in einem Gefahrgutfahrzeug eingesetzt wird, in dem ein Elektroschalter zentral die Stromversorgung aller Verbraucher abschaltet, schließt das Rückschlagventil 22. Das in der Kammer 30 befindliche, unter Druck stehende Gas kann sich dann entspannen, es drückt also die Membran 28 aus der in Fig. 1 gezeigten Stellung in die in Fig. 2 gezeigte Stellung, wodurch sich die Kammer 32 für die Flüssigkeit verkleinert und somit Flüssigkeit heraus gedrängt wird. Da das Rückschlagventil 22 geschlossen ist, wird die Flüssigkeit entsprechend dem Pfeil 36 zur Abgabeeinheit 14 und von dieser über die Rücklaufleitung 24 zum Hauptbehälter 16 gedrückt. Somit gibt es noch einen Volumenstrom im Gesamtsystem, insbesondere an der Abgabeeinheit 14 vorbei, der die Abgabeeinheit 14 nach Beendigung des Betriebs der Pumpe 20 weiter kühlt. Dadurch werden insbesondere elektronische Bauteile in der Abgabeeinheit 14 vor einem Überhitzen geschützt.

## Patentansprüche

1. Kraftwagen mit einem System (10) zum Zuführen von Flüssigkeit in ein anderes Medium, wobei das System (10) einen Hauptbehälter (16) für Flüssigkeit umfasst, der über eine Zulaufleitung (18) mit einer Abgabeeinheit (14) gekoppelt ist, die zum Abgeben von Flüssigkeit an das andere Medium dient, wobei die Abgabeeinheit (14) über eine Rücklaufleitung (24) mit dem Hauptbehälter (16) gekoppelt ist, um Flüssigkeit zu diesem zurückzuführen,
**gekennzeichnet durch**
einen von einer Öffnung (34) in einer der Zulaufleitung (18) zugänglichen weiteren Behälter (26) für Flüssigkeit, wobei der weitere Behälter (26) nach einer Beendigung eines Betriebs des Systems (10), in welchem Flüssigkeit aus dem Hauptbehälter (16) zur Abgabeeinheit (14) gefördert wird, derart selbsttätig entleerbar ist, dass Flüssigkeit zur Kühlung der Abgabeeinheit (14) aus dem weiteren Behälter (26) über die Abgabeeinheit (14) zum Hauptbehälter (16) strömen kann.

2. Kraftwagen nach Anspruch 1,
**dadurch gekennzeichnet, dass**
der weitere Behälter (26) an die Zulaufleitung (18) angekoppelt ist.

3. Kraftwagen nach Anspruch 1 oder 2,
**gekennzeichnet durch**
stromlos arbeitende Mittel (28) zum Bereitstellen von auf die Flüssigkeit im weiteren Behälter (26) wirkendem und diese Flüssigkeit in Abwesenheit eines Gegendrucks heraus drängendem Druck.

4. Kraftwagen nach einem der vorherigen Ansprüche,
**gekennzeichnet durch**
eine zwischen dem Hauptbehälter (16) und dem weiteren Behälter (26) angeordnete Pumpe (20) zum Fördern von Flüssigkeit aus dem Hauptbehälter (16) zur Abgabeeinheit (14) und ein Rückschlagventil (22) zwischen der Pumpe (20) und dem weiteren Behälter (26).

5. Kraftwagen nach einem der vorherigen Ansprüche, bei dem der weitere Behälter (26) als Druckspeicher ausgebildet ist.

6. Kraftwagen nach Anspruch 5, bei dem der weitere Behälter (26) ein Membrandruckbehälter ist.

7. Kraftwagen nach einem der vorherigen Ansprüche, bei dem das System (10) druckgaslos zu arbeiten, insbesondere druckgaslos den Betrieb der Abgabe von Flüssigkeit zu bewirken, ausgelegt ist.

8. Kraftwagen nach einem der vorherigen Ansprüche, bei dem das System (10) mit einer einen Verbrennungsmotor des Kraftwagens nachgeordneten Abgasnachbehandlungseinheit (12) des Kraftwagens gekoppelt ist, um in das Abgas Flüssigkeit einzubringen.

9. Kraftwagen nach einem der vorherigen Ansprüche, bei dem der Hauptbehälter (16) mit Harnstofflösung befüllt ist.

10. Verfahren zum Betreiben eines Systems (10), in dem Flüssigkeit aus einem Hauptbehälter (16) über eine Zulaufleitung (18) einer Abgabeeinheit (14) zugeführt wird und zumindest zum Teil von der Abgabeeinheit (14) an ein anderes Medium außerhalb des Systems (10) abgegeben wird, wobei ein nicht abgegebener Teil dieser Flüssigkeit über eine Rücklaufleitung (24) zum Hauptbehälter (16) zurück geführt wird, wobei bei dem Verfahren während eines Betriebs, bei welchem die Abgabe erfolgt, verursacht wird, dass nach Beendigung dieses Betriebs die Flüssigkeit aus einem an die Zulaufleitung (18) angekoppelten weiteren Behälter (26) zur Kühlung der Abgabeeinheit (14) über die Abgabeeinheit (14) zum Hauptbehälter (16) geführt wird.

11. Verfahren nach Anspruch 10, bei dem während eines Betriebs, bei welchem die Abgabe erfolgt, Flüssigkeit in dem weiteren Behälter (26) gespeichert wird, der so ausgestaltet ist, dass nach Beendigung dieses Betriebs Flüssigkeit selbsttätig aus dem weiteren Behälter (26) gefördert wird.

## Claims

1. Motor car having a system (10) for feeding liquid into another medium, wherein the system (10) includes a main vessel (16) for liquid which is coupled via a feed line (18) to an output unit (14) which serves to output liquid to the other medium, wherein the output unit (14) is coupled via a return line (24) to the main vessel (16) in order to feed liquid back to it, **characterised by**
a further vessel (26) for liquid, accessible from an opening (34) in the feed line (18), wherein the further vessel (26) can be automatically emptied after the end of operation of the system (10), in which liquid is delivered from the main vessel (16) to the output unit (14), in such a way that liquid can flow out of the further vessel (26) via the output unit (14) to the main vessel (16) in order to cool the output unit (14).

2. Motor car according to claim 1,
**characterised in that**
the further vessel (26) is coupled to the feed line (18).

3. Motor car according to claim 1 or 2,
**characterised by**
means (28) working without current to provide pressure acting on the liquid in the further vessel (26) and forcing this liquid out in the absence of a counter pressure.

4. Motor car according to one of the preceding claims,
**characterised by**
a pump (20) arranged between the main vessel (16) and the further vessel (26), said pump delivering liquid from the main vessel (16) to the output unit (14), and a non-return valve (22) between the pump (20) and the further vessel (26).

5. Motor car according to one of the preceding claims, in which the further vessel (26) is formed as a pressure storage medium.

6. Motor car according to claim 5, wherein the further vessel (26) is a membrane pressure vessel.

7. Motor car according to one of the preceding claims, wherein the system (10) is designed to work without compressed gas, in particular to bring about the operation of the output of liquid without compressed gas.

8. Motor car according to one of the preceding claims, wherein the system (10) is coupled with an exhaust gas treatment unit (12) arranged downstream of an internal combustion engine of the motor car in order to incorporate liquid into the exhaust gas.

9. Motor car according to one of the preceding claims, wherein the main vessel (16) is filled with a urea solution.

10. Method for operating a system (10), in which liquid is fed from a main vessel (16) via a feed line (18) to an output unit (14) and is output at least in part by the output unit (14) to another medium outside of the system (10), wherein a non-output part of this liquid is fed back via a return line (24) to the main vessel (16), wherein during operation, in which the output takes place, after the end of this operation the liquid is fed out of a further vessel (26) coupled to the feed line (18) via the output unit (14) to the main vessel (16) in order to cool the output unit (14).

11. Method according to claim 10, wherein during operation, in which the output takes place, liquid is stored in the further vessel (26), which is designed so that after the end of this operation liquid is automatically delivered from the further vessel (26).

## Revendications

1. Véhicule automobile doté d'un système (10) pour acheminer du liquide dans un autre fluide, le système (10) comprenant un réservoir principal (16) pour le liquide, qui est raccordé par l'intermédiaire une conduite d'amenée (18) à une unité de distribution, qui sert à la distribution de liquide à un autre fluide, l'unité de distribution (14) étant raccordée par l'intermédiaire d'une conduite de retour au réservoir principal (16) pour ramener le liquide à celui-ci, **caractérisé en ce que** par l'intermédiaire d'un autre réservoir (26) accessible par un orifice (34) prévu dans une des conduites d'amenée (18) destinées au liquide, l'autre réservoir (26) après la fin d'un fonctionnement du système (10), dans lequel du liquide en provenance du réservoir principal (16) est acheminé vers l'unité de distribution (14), peut se vider automatiquement de telle sorte que du liquide destiné au refroidissement de l'unité de distribution (14) puisse s'écouler à partir de l'autre réservoir (26) par l'intermédiaire de l'unité de distribution (14) vers le réservoir principal (16).

2. Véhicule automobile selon la revendication 1, **caractérisé en ce que** l'autre réservoir (26) est raccordé à la conduite d'amenée (18).

3. Véhicule automobile selon la revendication 1 ou la revendication 2, **caractérisé par** un moyen fonctionnant sans courant (28) destiné à préparer une pression opérant sur le liquide dans l'autre réservoir (26) et sortant ce liquide en le pressant en l'absence d'une contre-pression.

4. Véhicule automobile selon l'une quelconque des revendications précédentes, **caractérisé par** une pompe (20) disposée entre le réservoir principal (16) et l'autre réservoir (26) pour acheminer du liquide à partir du réservoir principal (16) vers l'unité de distribution (14) et par un clapet anti-retour (22) entre la pompe (20) et l'autre réservoir (26).

5. Véhicule automobile selon l'une quelconque des revendications précédentes, l'autre réservoir (26) étant conçu comme un accumulateur de pression.

6. Véhicule automobile selon la revendication 5, l'autre réservoir (26) étant un réservoir sous pression à membrane.

7. Véhicule automobile selon l'une quelconque des revendications précédentes, le système (10) étant conçu pour fonctionner sans gaz comprimé, en particulier pour provoquer le fonctionnement sans gaz comprimé de la distribution en liquide.

8. Véhicule automobile selon l'une quelconque des revendications précédentes, le système (10) étant raccordé à une unité de post-traitement des gaz d'échappement (12) du véhicule automobile disposée en aval du moteur à combustion interne du véhicule automobile.

9. Véhicule automobile selon l'une quelconque des revendications précédentes, le réservoir principal (16) étant rempli d'une solution d'urée.

10. Procédé destiné à faire fonctionner un système (10), du liquide étant acheminé à partir du réservoir principal (16) par l'intermédiaire d'une conduite d'amenée (18) vers une unité de distribution (14) et au moins en partie distribué par l'unité de distribution (14) à un autre fluide à l'extérieur du système (10), une partie non distribuée de ce liquide étant ramenée par l'intermédiaire d'une conduite de retour (24) dans le réservoir principal (16), selon le procédé, au cours du fonctionnement pendant la distribution, après la fin de ce fonctionnement on contraint le liquide provenant d'un autre réservoir (26) raccordé à la conduite d'amenée (18) pour le refroidissement de l'unité de distribution (14) à s'acheminer par l'intermédiaire de l'unité de distribution (14) dans le réservoir principal (16).

11. Procédé selon la revendication 10, pendant le fonctionnement, au cours duquel s'effectue la distribution, du liquide est stocké dans l'autre réservoir (26), ledit réservoir est conçu de telle sorte qu'à la fin de ce fonctionnement, du liquide soit acheminé automatiquement à partir de l'autre réservoir (26).
